# EUROPÄISCHE PATENTSCHRIFT

(11) **EP 0 652 143 B1**
(45) Veröffentlichungstag und Bekanntmachung des Hinweises auf die Patenterteilung: **15.12.1999**
(21) Anmeldenummer: 94103847.3
(22) Anmeldetag: 12.03.1994
(51) Int. Cl.: B60T 8/00, B60T 13/66, B60T 7/12, B60T 8/32

(54) **Verfahren zur Durchführung eines automatischen Bremsvorgangs für Kraftfahrzeuge mit einem Antiblockiersystem**
Method for carrying out an automatic braking operation for motor vehicles equiped with an antilock brake system
Procédé pour la mise en oeuvre d'un freinage automatique pour véhicules automobiles équipés d'un système de freinage antiblocage

(30) Priorität: 08.11.1993 DE 4338066
(43) Veröffentlichungstag der Anmeldung: 10.05.1995
(73) Patentinhaber: DaimlerChrysler AG, 70567 Stuttgart (DE)
(72) Erfinder: Rump, Siegfried, Dipl.-Ing., D-71384 Weinstadt (DE); Steiner, Manfred, Dipl.-Ing., D-71364 Winnenden (DE)

(56) Entgegenhaltungen:
- DE-A- 4 036 940
- DE-A- 4 140 271
- DE-C- 4 028 290
- DE-C- 4 208 496

## Beschreibung

Die Erfindung betrifft einen automatischen Bremsvorgang nach dem Oberbegriff von Anspruch 1, wie er beispielsweise aus der DE 40 28 290 C1 als bekannt hervorgeht.

Bei dem dort beschriebenen automatischen Bremsvorgang wird dann, wenn der Fahrer das Bremspedal mit einer einen Schwellenwert überschreitenden Geschwindigkeit betätigt ein Bremsdruck erzeugt, der über dem der Stellung des Bremspedals entsprechenden Bremsdruck liegt. Dadurch soll der Bremsweg des Fahrzeugs bei Notbremsungen, wie sie vom Fahrer etwa zur Verhinderung von Kollisionen in Notsituationen durchgeführt werden, verringert werden. Der automatische Bremsvorgang wird gemäß dieser Schrift dann abgebrochen, wenn die Pedalrücknahmegeschwindigkeit einen bestimmten Schwellenwert überschreitet. Der maximal erzeugbare Bremsdruck wird dabei gemäß einer Ausgestaltung von der Antiblockiereinrichtung so begrenzt, daß ein Blockieren von Räder gerade noch nicht stattfindet. Weitere Auslöse- und Abbruchkriterien für einen automatischen Bremsvorgang sind beispielsweise in der nicht vorveröffentlichten Patentanmeldung DE-P. 43 25 940.5 enthalten.

Der automatische Bremsvorgang verkürzt den Bremsweg eines Fahrzeugs, weil ein bestimmter zu erreichender Bremsdruck zumindest schneller erzeugt wird, wie dies bei einer entsprechenden Betätigung des Bremspedals durch den Fahrer gegeben ist. Ferner werden in der Regel höhere Bremsdrücke erzeugt, da Fahrer häufig nicht ausreichend stark bremsen. Die so stattfindende Bremsung nutzt die Information über den Kraftschlußbeiwert, die durch ein im Fahrzeug vorhandenes Antiblockiersystem (ABS) gegeben sind, nur insoweit aus, als das Antiblockiersystem ein Blockieren der Räder während des automatischen Bremsvorgangs dadurch verhindert, daß das Erreichen der Blockiergrenze an einem Rad einen weiteren Anstieg des Bremsdrucks verhindert.

Aufgabe der Erfindung ist es, den gattungsgemäß zugrundegelegten automatischen Bremsvorgang dahingehend zu verbessern, daß der Bremsweg des Fahrzeug durch den automatischen Bremsvorgang weiter verringert wird.

Die Aufgabe der Erfindung wird dadurch gelöst, daß der bei der Durchführung des automatischen Bremsvorgangs erzeugte Bremsdruck an jeder Achse soweit erhöht wird, daß das Antiblockiersystem das Erreichen der Blockiergrenze zumindest eines Rades der Achse feststellt. Eine Verringerung des Bremsweges gegenüber dem schon bekannten automatischen Bremsvorgang wird demnach dadurch erreicht, daß der Bremsdruck nicht nur soweit erhöht wird, daß ein Rad des Fahrzeugs die Blockiergrenze erreicht sondern daß der Bremsdruck der einzelnen Achsen soweit erhöht wird bis zumindest ein Rad dieser Achse die Blockiergrenze erreicht. Somit wird an jeder Achse die maximale Kraftübertragung zwischen Rad und Fahrbahn genutzt. Dabei ist es bei Personenkraftwagen vor allem von der Auslegung der Bremsanlage des Fahrzeugs, bei Lastkraftwagen vor allem von der Beladung und der Lastverteilung der Beladung abhängig, an welcher der Achsen des Fahrzeugs die Blockiergrenze zuerst erreicht wird. Als Blockiergrenze eines Rades ist im Rahmen dieser Erfindung der Moment anzusehen, in dem der Schlupf zwischen Rad und Straße so groß wird, daß ein weiterer Bremsdruckanstieg eine Regelung der Bremskraft an diesem Rad oder an der Achse des Rades durch das Antiblockiersystem ausgelöst wird. Gemäß einer Ausgestaltung der Erfindung wird der Bremsdruck bis zum Erreichen der Blockiergrenze durch zumindest ein Rad der zuerst blockierenden Achse durch Erhöhung des Bremsdrucks im gesamten Bremskreislauf erzeugt. Anschließend wird der Bremsdruck an den noch nicht blockierenden Achsen dadurch erhöht, daß in die entsprechenden Bremszylinder Bremsdruckmedium aus einer Druckquelle eingeleitet wird. In vorteilhafter Weise können an angetriebenen Achsen die Einrichtungen für die Antriebsschlupfregeglung genutzt werden.

Das erfindungsgemäße Verfahren kann selbstverständlich auf Fahrzeuge mit einer beliebigen Anzahl von Fahrzeugachsen angewendet werden. Dabei können auch Achsen, die im wesentlichen die gleiche Last tragen - wie Tandem- oder Doppelachsen -, zusammengefaßt werden. Für sie ist dann eine gemeinsame Druckquelle vorhanden, über den in den Bremszylindern der Räder der selbe gemeinsame Bremsdruck erzeugt wird. Eine gemeinsame Druckquelle kann mehrere Achsen mit Bremsmedium versorgen, wenn für jede Achse jeweils zumindest ein Steuerventil zum Regeln des Bremsdrucks verwendet wird.

Zweckmäßige Ausgestaltungen der Erfindung können den Unteransprüchen entnommen werden; im übrigen ist die Erfindung an Hand eines in der Zeichnung dargestellten Ausführungsbeispieles nachfolgend noch erläutert; dabei zeigt:
- Fig. 1: ein Flußdiagramm eines erfindungsgemäßen Verfahrens zur Durchführung eines automatischen Bremsvorgangs und
- Fig. 2: eine Anordnung zur Durchführung des erfindungsgemäßen

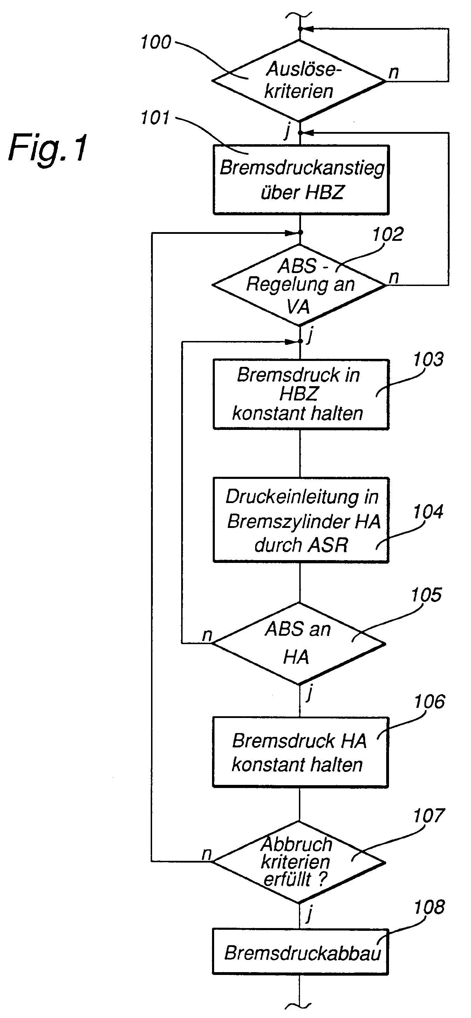

In der Fig. 1 ist ein Verfahren zur Durchführung eines automatischen Bremsvorgangs an Hand eines zweiachsigen Personenkraftwagens erläutert, bei dem die Bremsanlage durch konstruktive Maßnahmen, wie die Bremskraftverteilung, so ausgelegt ist, daß die Räder der Vorderachse VA zuerst blockieren. Die Hinterachse HA ist angetrieben. Eine Antriebsschlupfregelung ASR für die Hinterachse HA ist im Fahrzeug vorhanden.

Im Schritt 100 wird überprüft ob das Auslösekriterium für den automatischen Bremsvorgang erfüllt ist. Wenn dieses Auslösekriterium erfüllt ist, so wird der Druck im Hauptbremszylinder HBZ gemäß Schritt 101 erhöht. Im Schritt 102 wird überprüft, ob das Antiblockiersystem ABS an der zuerst blockierenden Vorderachse VA regelt oder nicht. Ist eine ABS-Regelung an der Vorderachse VA, also ein Blockieren zumindest eines Rades, nicht gegeben, so wird zum Schritt 101 zurückgesprungen und der Bremsdruck weiter erhöht. Sobald im Schritt 102 festgestellt wird, daß ein ABS-Regeleingriff vorliegt, wird gemäß Schritt 103 der Bremsdruck im Hauptbremszylinder konstant gehalten.

Der Druck im Hauptbremszylinder kann durch Belüften der pedalseitigen Kammer eines Unterdruckbremskraftverstärkers erzeugt werden. Soll ein Druck im Hauptbremszylinder konstant gehalten werden, so kann der Druck in der Pedalseitigen Kammer des Bremskraftverstärkers durch Be- und Entlüften geregelt werden. Dabei können auch durch Pedalwege erzeugte Druckschwankungen ausgeglichen werden. Die Druckregelung in der pedalseitigen Kammer des Unterdruckbremskraftverstärkers kann beispielsweise durch ein im Steuergehäuse des Bremskraftverstärkers angeordnetes Magnetventil erfolgen.

Im Schritt 104 wird der Bremsdruck in den Bremszylindern der Räder der Hinterachse HA dadurch erhöht, daß aus der Druckquelle der Antriebsschlupfregelung ASR zusätzliches Bremsmedium in die Bremszylinder eingeleitet wird. Die Zufuhr von Bremsmedium - bei Personenkraftwagen in der Regel Bremsflüssigkeit - erfolgt solange, bis im Schritt 105 festgestellt wird, daß ein Regeleingriff des Antiblockiersystems ABS an der Hinterachse HA erfolgt. Gemäß Schritt 106 wird der erzielte maximale Bremsdruck vor dem Antiblockiersystem-Regeleingriff an der Hinterachse aufrechterhalten.

Im Schritt 107 wird sodann überprüft ob ein Abbruchkriterium erfüllt wird. Ist dies der Fall, so erfolgt gemäß dem Schritt 108 der Abbau des erzeugten Bremsdruck auf das der Stellung des Bremsdruckniveau. Ein Verfahren für einen entsprechenden Bremsdruckabbau kann beispielsweise der nicht vorveröffentlichen deutschen Patentanmeldung DE-P. 43 38 067.0 entnommen werden.

Wird im Schritt 107 festgestellt, daß die entsprechenden Abbruchkriterien nicht erfüllt sind, so erfolgt ein Sprung zurück zum Schritt 102, wodurch überprüft wird, ob der erzeugte Bremsdruck immer noch der Blockiergrenze entspricht.

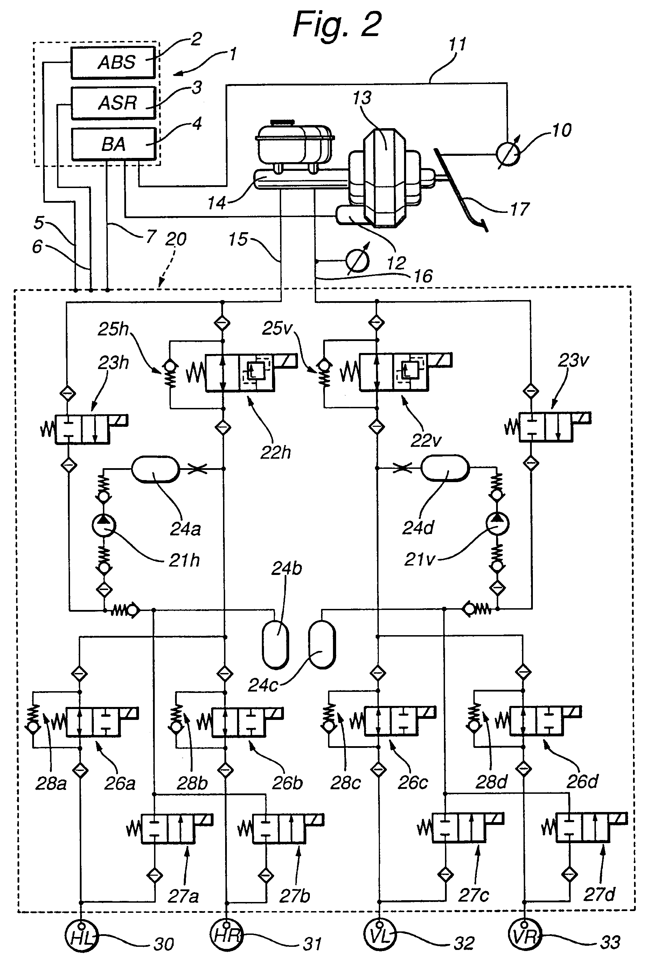

Die Fig. 2 zeigt eine Anordnung zu Durchführung des Verfahrens für ein zweiachsiges Fahrzeug, das sowohl ein Antiblockiersystem ABS als auch eine Antriebsschlupfregelung ASR aufweist.

In dem Bremssteuergerät 1 sind die Steuergeräte 2,3,4 der Antiblockiereinrichtung ABS, der Antriebsschlupfregelung ASR und der automatischen Bremsvorgangs BA zusammengefaßt. Der besseren Übersicht wegen sind in der Figur die zu den Sensoren und anderen Steuergeräten führenden Leitungen nicht dargestellt. Eine Ausnahme davon ist die Leitung 11, die das Signal des Pedalwegsensors 10 an das Steuergerät 4 für den automatischen Bremsvorgang BA überträgt. In Abhängigkeit des von diesem Sensor erzeugten Signals kann der automatische Bremsvorgang ausgelöst werden. Dies kann dann zum Beispiel gemäß der nicht vorveröffentlichten Patentanmeldung DE-P 43 25 940.5 erfolgen.

Von den Steuergeräten 2,3 und 4 kommend verlassen die Bremsdrucksteuerleitungen 5,6,7 das Bremssteuergerät 1 und führen zu der Bremdrucksteuerung 20. In der Bremsdrucksteuerung 20 wird über Ventile der an den Bremsen 30,31,32 und 33 erzeugte Bremsdruck geregelt.

Von dem Steuergerät 4 für den automatischen Bremsvorgang führt eine Steuerleitung 8 zu dem Magnetventil 12, das am Unterdruckbremskraftverstärker 13 angeordnet ist. Über das Magnetventil 12 kann die pedalseitige Kammer des Unterdruckbremskraftverstärkers belüftet werden und dadurch im Hauptbremszylinder 14 ein höherer Bremsdruck erzeugt werden, als es der Stellung des Bremspedals 17 vor Beginn des automatischen Bremsvorgangs entspricht. Ausgehend vom Hauptbremszylinder führen die Bremsleitungen 15 bzw. 16 an die Bremsen 30,31 der Hinterachse HA bzw. an die Bremsen 32,33 der Vorderachse. In normalem Betriebszustand, das heißt, wenn durch das Bremssteuergerät 1 keine Regelung der Bremsen 30,31,32,33 stattfindet, so sind die Ventile der Bremsdrucksteuerung so geschaltet, daß die im Hauptbremszylinder 14 erzeugten Bremsdrücke über die Bremsleitungen 15,16 direkt in die Radbremszylinder der Bremsen 30,31,32,33 eingeleitet werden.

Die Bremsdrucksteuerung 20 steuert den Bremsdruck, wenn eine Regelung durch die Bremssteuerung 1 einsetzt. Dazu ist für jeden der beiden Bremskreise - der eine versorgt die Vorderachse VA der andere die Hinterachse HA - eine Rückförderpumpe 21v,21h vorhanden ist. Dabei können die beiden Rückförderpumpen 21v,21h über einen gemeinsamen Antrieb verfügen. Die Rückförderpumpen 21v,21h dienen bei einer Regelung durch die Steuergerät 2 des Antiblockiersystems ABS dazu, zu hohen Bremsdruck im Radbremszylinder durch Abpumpen von Bremsflüssigkeit abzubauen.

Die Rückförderpumpen 21v,21h dienen im Fall der Regelung des Bremsdrucks durch das Steuergerät 3 der Antriebsschlupfregelung ASR dazu, in einzelnen Bremsen 30,31,32,33 einen erhöhten Bremsdruck durch Einspeisen von zusätzlicher Bremsflüssigkeit zu erzeugen. Dazu wird das Umschaltventil 22v,22h, das für jeden Bremskreislauf einmal vorhanden ist, betätigt. Das Umschaltventil 22v bzw. 22h sperrt dabei den Hauptbremszylinder 14 gegenüber höheren Drücken an den Bremsen 23,33 bzw. 30,31 ab. Gleichzeitig wird das in Ruhestellung sperrende Vorladeventil 23v bzw. 23h geschaltet. Ein im Hauptbremszylinder 14 erzeugter Bremsdruck, der den durch die Antriebsschlupfregelung erzeugten Bremsdruck überschreitet, wird dabei über das Rückschlagventil 25v bzw. 25h den Bremsen zugeführt.

Die Druckspeicher 24a,24,b,24c,24d dienen dabei als Ausgleichsbehälter um Druckstöße im Bremskreislauf aufzufangen, wie sie beispielsweise beim Schalten der Ventile auftauchen oder aber, wenn eine Rückförderpumpe 21v,21h von dem ABS-Regelung auf ASR-Regelung - oder umgekehrt - umgeschaltet wird.

Im übrigen ist vor jeder Bremse 30,31,32,33 noch ein Einlaßventil 26a,26b,26c,26d, mit parallel dazu angeordnetem Rückschlagventil 28a,28b,28c,28d, und ein Auslaßventil 27a,27b,27c,27d angeordnet.

In Ruhestellung sind die Einlaßventile 26a,26b,26c,26d geöffnet. Sie schließen dann, wenn eine Regelung durch das Steuergerät 2 der Antriebsschlupfregelung eintritt und eine weitere Bremsdruckerhöhung an dem entsprechenden Rad verhindert werden soll. In diesem Fall wird bei fallendem eingeleiteten Bremsdruck der Rückfluß von Bremsflüssigkeit in den Hauptbremszylinder 14 durch das Rückschlagventil 28a,28b,28c,28d sichergestellt.

Das gezielte Absenken des Bremsdrucks an einer Bremse 30,31,32,33 erfolgt durch Öffnen des entsprechenden, in Ruhe gesperrten Auslaßventils 27a,27b,27c,27d . Ein Bremsdruck an einer Bremse 30,31,32,33 kann dadurch konstant gehalten werden, das dazugehörige Einlaßventil 26a,26b,26c,26d als auch das dazugehörende Auslaßventil 27a,27b,27c,27d sowie das dazugehörige Umschaltventil 22v,22h auf sperren geschaltet ist.

Selbstverständlich ist systembedingt der Bremsdruck an jeder Achse zu jeder Zeit durch den an der jeweiligen Achse erzeugbaren maximalen Bremsdruck begrenzt. Während des automatischen Bremsvorgangs wird für jede Achse, falls beim Einleiten des an dieser Achse maximal erzeugbaren Bremsdrucks die Blockiergrenze für zumindest ein Rad dieser Achse nicht erreicht wird, der an dieser Achse maximal erzeugbare Bremsdruck eingeleitet bis entweder der automatische Bremsvorgang beendet wird oder zumindest ein Rad der Achse die Blockiergrenze erreicht. Dies geschieht unabhängig von gegebenenfalls an anderen Achsen vorzunehmenden weiteren Bremsdruckerhöhungen. In dem Ausführungsbeispiel gemäß Fig.1 wird dies dadurch erreicht, daß falls in der Abfrage nach Schritt 102 festgestellt wird, daß eine Regelung der Vorderachse nicht gegeben ist, in einer weiteren Abfrage überprüft wird ob der über den Hauptbremszylinder maximal erzeugbare Bremsdruck erzeugt wird. Ist dies der Fall so erfolgt ein Sprung zum Schritt 103. Andernfalls erfolgt der Sprung zum Schritt 101.

## Patentansprüche

1. Verfahren zur Durchführung eines automatischen Bremsvorgangs für Kraftfahrzeuge mit einem Antiblockiersystem, wobei ein automatischer Bremsvorgang nach Erfüllen eines Auslösekriteriums durchgeführt wird, bei dem automatischen Bremsvorgang an jeder Achse (VA,HA) des Fahrzeugs ein solcher Bremsdruck erzeugt wird, daß zumindest ein Rad zumindest einer Achse die Blockiergrenze erreicht, wobei das Erreichen der Blockiergrenze der einzelnen Räder durch das Antiblockiersystem festgestellt wird, wobei während des automatischen Bremsvorgangs ein größerer als sich aus der Stellung des Bremspedals (17) ergebender Druck erzeugt wird und wobei der automatische Bremsvorgangs nach Erfüllen eines Abbruchkriteriums beendet wird,
**dadurch gekennzeichnet,**
daß die Bremsdruckerhöhung bis zum Erreichen der Blockiergrenze der zuerst blockierenden Achse (VA) über den Hauptbremszylinder (13,14) erfolgt und daß zur weiteren Bremsdruckerhöhung an den anderen Achsen (HA) zumindest eine Druckquelle (21v,21h) für das Bremsmedium des Fahrzeugs vorhanden ist und wobei der an den anderen Achsen erzeugte Bremsdruck über zumindest ein Steuerventil (22v,22h) geregelt ist.

2. Verfahren nach Anspruch 1,
**dadurch gekennzeichnet,**
daß für jede Achse (VA,HA) jeweils eine Druckquelle (21v,21h) vorhanden ist.

3. Verfahren nach Anspruch 1,
**dadurch gekennzeichnet,**
daß die zumindest eine Druckquelle (21v,21h) die Druckquelle einer Antriebsschlupfregelung ist.

4. Verfahren nach Anspruch 2,
**dadurch gekennzeichnet,**
daß als Druckquelle (21v,21h) und Steuerventile (22v,22h) für die angetriebenen Achsen des Kraftfahrzeugs die Druckquelle und Steuerventile einer Antriebsschlupfregelung für diese Achse genutzt werden.

5. Verfahren nach Anspruch 1,
**dadurch gekennzeichnet,**
daß zu jedem Zeitpunkt der Bremsdruck für jede Achse (VA,HA) durch den an dieser Achse erzeugbaren maximalen Bremsdruck begrenzt ist.

## Claims

1. Process for carrying out an automatic braking procedure for vehicles with an anti-locking system, whereby an automatic braking procedure is carried out on fulfilment of a release criterion, whereby a pressure which is greater than that arising from the position of the brake-pedal is produced, during the automatic braking procedure, and whereby the automatic braking-procedure is ended following the fulfilment of an interruption criterion,
characterized in that
during the automatic braking-procedure, a brake-pressure is produced, on each axle (front axle (FA) and rear axle (RA)), such that at least one wheel of at least one axle reaches the anti-locking threshold, whereby the reaching of the locking-threshold of the separate wheels is determined by the anti-locking system, the increase in brake-pressure occurs, up to the point where the locking-threshold of the axle which is first to lock (front axle (VA)) is reached, by means of the main brake-cylinder (13, 14), and, for further increase in brake-pressure on the other axle (rear axle (RA)), at least one source (21f, 21r) of pressure is present for the brake-medium, and whereby the brake-pressure produced on the other axle is regulated by means of at least one control valve (22f, 22r).

2. Process in accordance with claim 1,
characterized in that
there is a pressure-source (21f, 21r) for each axle (FA, RA).

3. Process in accordance with claim 1,
characterized in that
the minimum single pressure-source (21f, 21r) is the pressure-source of a drive-slip regulating means.

4. Process in accordance with claim 2,
characterized in that
the pressure-source and control valves of a drive-slip regulation means are used as the pressure-source (21f, 21r) and control valves (22f, 22r) of the driven vehicle axles.

5. Process in accordance with claim 1,
characterized in that
the maximum pressure which can be produced at any one time, on each axle (FA, RA), has a certain limit.

## Revendications

1. Procédé de mise en oeuvre d'un freinage automatique pour des véhicules automobiles équipés d'un système de freinage antiblocage, un processus de freinage automatique étant conduit après avoir satisfait à un critère de déclenchement, lors du processus de freinage automatique sur chaque essieu (VA, HA) du véhicule étant générée une pression de freinage telle qu'au moins une roue d'au moins un essieu atteigne la limite de blocage, l'atteinte de la limite de blocage des différentes roues étant constatée par le système antiblocage, où pendant que se déroule le processus de freinage automatique, une pression plus élevée que la pression résultant de la position de la pédale de freinage (17) est générée et le processus de freinage automatique étant achevé après avoir satisfait à un critère d'interruption,
caractérisé en ce que
l'augmentation de pression de freinage s'effectue jusqu'à atteinte de la limite de blocage de l'essieu (VA) se bloquant le premier, par l'intermédiaire du maître cylindre de frein (13, 14), et en ce que, pour continuer l'augmentation de la pression de freinage sur les autres essieux (HA), au moins une source de pression (21v, 21h) est prévue pour le fluide de freinage du véhicule, et la pression de freinage générée sur les autres essieux étant régulée par l'intermédiaire d'au moins une valve de commande (22v, 22h).

2. Procédé selon la revendication 1, caractérisé en ce que pour chaque essieu (VA, HA) est chaque fois prévue une source de pression (21v, 21h).

3. Procédé selon la revendication 1, caractérisé en ce que la au moins une source de pression (21v, 21h) est la source de pression d'une régulation anti-patinage d'entraînement.

4. Procédé selon la revendication 2,
caractérisé en ce qu'on utilise à titre de source de pression (21v, 21h) et de valves de commande (22v, 22h), pour les essieux entraînés du véhicule automobile, la source de pression et les valves de commande appartenant à une régulation antipatinage d'entraînement pour cet essieu.

5. Procédé selon la revendication 1,
caractérisé en ce que,
à tout moment, la pression de freinage pour chaque essieu (VA, HA) est limitée par la pression de freinage maximale pouvant être générée sur cet essieu.
